(19) Europäisches Patentamt
European Patent Office
Office européen des brevets

(11) **EP 2 993 214 A1**

(12) **EUROPÄISCHE PATENTANMELDUNG**

(43) Veröffentlichungstag:
**09.03.2016 Patentblatt 2016/10**

(51) Int Cl.:
***C09K 11/06*** (2006.01)

(21) Anmeldenummer: **14003034.7**

(22) Anmeldetag: **03.09.2014**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(71) Anmelder: **Julius-Maximilians-Universität Würzburg**
**97070 Würzburg (DE)**

(72) Erfinder:
• **Müller-Buschbaum, Klaus**
**DE - 97072 Würzburg (DE)**

• **Meinel, Lorenz**
**DE - 97082 Würzburg (DE)**
• **Stangl, Johannes**
**DE - 97070 Würzburg (DE)**
• **Matthes, Philipp**
**DE - 97070 Würzburg (DE)**
• **Germershaus, Oliver**
**CH - 4310 Rheinfelden (CH)**

(74) Vertreter: **FDST Patentanwälte**
**Nordostpark 16**
**90411 Nürnberg (DE)**

(54) **Verwendung einer Zusammensetzung für ein Packmittel**

(57) Die Erfindung betrifft die Verwendung einer Zusammensetzung für ein Packmittel (33), insbesondere für ein Packmittel (33) eines pharmazeutischen Produktes, wobei die Zusammensetzung eine lumineszierende Koordinationsverbindung der allgemeinen Formel $(M_x-L_y)_n$ mit zumindest einem Koordinationszentrum M, sowie mit einer Anzahl von an dem oder jedem Koordinationszentrum M koordinierten Liganden L umfasst, und wobei das oder jedes Koordinationszentrum M ausgewählt ist aus einer Gruppe, die Erdalkalimetalle, Seltene-Erd-Metalle und Metalle der 13. Gruppe und der 15. Gruppe des Periodensystems enthält. Des Weiteren betrifft die Erfindung ein Packmittel (33), welches eine entsprechende Zusammensetzung verwendet. Durch die gezielte Auswahl und/oder Kombination der in der Zusammensetzung enthaltenen Koordinationsverbindungen lassen sich - aufgrund der lumineszierenden Eigenschaften der Koordinationsverbindungen - sowohl die Qualität als auch die Sicherheit von in einem Packmittel (33) aufbewahrten empfindlichen Produkten auf einfache Weise kontrollieren und ein verbesserter UV-Schutz lichtempfindlicher Inhalte eines Packmittels erreichen.

Fig. 1

EP 2 993 214 A1

**Beschreibung**

Die Erfindung betrifft die Verwendung einer Zusammensetzung für ein Packmittel, insbesondere für ein Packmittel eines pharmazeutischen Produkts. Weiterhin betrifft die Erfindung ein Packmittel mit einer entsprechenden Zusammensetzung.

Ein Packmittel als solches dient grundsätzlich der Verpackung eines Produktes und schützt dieses beispielsweise bei Transport oder Lagerung vor äußeren Einflüssen oder Beschädigungen. Eine besondere Bedeutung kommt Packmitteln zu, die zur Verpackung empfindlicher Produkte, wie beispielsweise zur Verpackung von pharmazeutischen Produkten und Arzneimitteln verwendet werden.

Da pharmazeutische Produkte bzw. Arzneimittel einen wichtigen Bestandteil der allgemeinen Gesundheitsversorgung darstellen, müssen insbesondere deren Qualität und Wirksamkeit sichergestellt werden. Hierzu muss einerseits eine Wechselwirkung eines verwendeten Packmittels mit den in den Produkten enthaltenen Wirkstoffen oder Formulierungen ausgeschlossen werden, um mögliche Veränderungen der Formulierung bzw. des Arzneimittels auszuschließen. Beispielsweise müssen Diffusionsvorgänge durch das Packmittel oder die Migrationen von Verpackungsbestandteilen in das Produkt komplett ausgeschlossen werden, um die Wirksamkeit eines pharmazeutischen Produktes über dessen Lebenszeit gewährleisten zu können.

Andererseits muss sichergestellt werden, dass das Packmittel einen ausreichenden Schutz vor Verlust, oxidativem Abbau, Lichteinwirkung oder vor mikrobieller Kontamination des Produktes bietet. Je nach eingesetztem Material des Packmittels kann jedoch auch bei einem unter hohen Qualitätsstandards gefertigten Packmittel nicht immer sicher ausgeschlossen werden, dass ein in diesem aufbewahrtes Produkt möglicherweise durch Licht oder Feuchtigkeit geschädigt wird. Auch verlässliche Aussagen über die Echtheit eines in einem Packmittel aufbewahrten oder transportierten Produktes sind bisweilen nicht immer möglich.

Der Erfindung liegt als eine erste Aufgabe zugrunde, eine Zusammensetzung anzugeben, die sich aufgrund ihrer spezifischen Eigenschaften zur Charakterisierung und zum Schutz empfindlicher Produkte und insbesondere pharmazeutischer Produkte eignet.

Als eine zweite Aufgabe liegt der Erfindung zugrunde, ein Packmittel mit einer entsprechenden Charakterisierungs- und Schutzfunktion anzugeben.

Die erste Aufgabe der Erfindung wird erfindungsgemäß gelöst durch die Verwendung einer Zusammensetzung für ein Packmittel, insbesondere für ein Packmittel eines pharmazeutischen Produktes, wobei die Zusammensetzung eine lumineszierende Koordinationsverbindung der allgemeinen Formel $(M_xL_y)_n$ mit zumindest einem Koordinationszentrum M, sowie mit einer Anzahl von an dem oder jedem Koordinationszentrum M koordinierten Liganden L umfasst, und wobei das oder jedes Koordinationszentrum M ausgewählt ist aus einer Gruppe, die Erdalkalimetalle, Seltene-Erd-Metalle und Metalle der 13. Gruppe und der 15. Gruppe des Periodensystems enthält.

Die Erfindung geht von der Tatsache aus, dass der Sicherheit eines Konsumenten bzw. eines Patienten bei der Arzneimitteleinnahme eine große Bedeutung zukommt. Allerdings werden Patienten beispielsweise durch den unkontrollierten Versandhandel im Internet zunehmend mit Arzneimittelfälschungen konfrontiert. Diese stellen eine erhebliche Gefahr für die Gesundheit dar und können im ungünstigsten Fall ein Krankheitsbild verschlimmern. Eine Echtheitsprüfung der Arzneimittel ist hierbei insbesondere für Privatleute kaum möglich.

Weiterhin berücksichtigt die Erfindung, dass auch die Überprüfung der Verwendbarkeit eines pharmazeutischen Produktes hinsichtlich seiner Haltbarkeit nur in Grenzen möglich ist. Üblicherweise erfolgt eine solche Haltbarkeitsprüfung anhand des jeweiligen Verfallsdatums auf dem entsprechenden Packmittel des pharmazeutischen Produktes. Da das Verfallsdatum allerdings eine ordnungsgemäße Lagerung voraussetzt, die die Produktbeschaffenheit im Hinblick auf Qualität und Wirkung nicht verändert, gibt das Verfallsdatum nur bedingt Aufschluss über die tatsächliche Verwendbarkeit des Produktes.

So besteht beispielsweise bei Produkten, die über einen langen Zeitraum gelagert oder über weite Wege transportiert werden müssen, die Gefahr einer unerwünschten Exposition durch Feuchtigkeit, Lichteinstrahlung oder ähnlichem, so dass das Produkt trotz noch nicht abgelaufenem Verfallsdatum möglicherweise nicht mehr verwendbar ist. Alternativ besteht die Möglichkeit, dass ein Produkt noch über das Verfallsdatum heraus nutzbar ist, und bei Überschreiten des Verfallsdatums dennoch verworfen wird. Das Verfallsdatum bzw. die Haltbarkeitsfristen lassen so nur begrenzt verlässliche Aussagen über die tatsächliche Qualität eines pharmazeutischen Produktes zu.

Unter Berücksichtigung der vorbeschriebenen Problematik erkennt die Erfindung nun, dass die Kontrolle eines pharmazeutischen Produktes vereinfacht und damit die Produktsicherheit als solche erhöht werden kann, wenn ein Packmittel mit einer Zusammensetzung eingesetzt wird, anhand derer auf einfache Art und Weise Aussagen sowohl hinsichtlich der Echtheit, als auch hinsichtlich der zum Zeitpunkt der gewünschten Anwendung vorhandenen Qualität des Produktes getroffen werden können. Hierzu wird eine Zusammensetzung verwendet, die eine Koordinationsverbindung mit lumineszierenden Eigenschaften umfasst. Die Koordinationsverbindung mit der allgemeinen Formel $(M_xL_y)_n$ umfasst zumindest ein Koordinationszentrum M, sowie eine Anzahl von an dem oder jedem Koordinationszentrum koordinierten Liganden, wobei das oder jedes Koordinationszentrum ausgewählt ist aus einer Gruppe, die Erdalkalimetalle, Seltene-Erd-Metalle und Metalle der 13. Gruppe und der 15. Gruppe des Periodensystems enthält.

Die lumineszierenden Eigenschaften der Koordinationsverbindungen rühren von den Koordinationszentren und/oder den jeweiligen Liganden der in der Zusammensetzung eingesetzten Koordinationsverbindungen her und sind charakteristisch für die jeweils eingesetzte Koordinationsverbindung. Durch die gezielte Auswahl - und Kombination - einer oder mehrerer Koordinationsverbindungen kann ein Packmittel hergestellt bzw. bereitgestellt werden, welches verlässliche Aussagen sowohl hinsichtlich der Echtheit als auch hinsichtlich der tatsächlichen Haltbarkeit des in einem Packmittel aufbewahrten pharmazeutischen Produktes liefert.

Die Anzahl von in einer Zusammensetzung enthaltener Koordinationsverbindungen, die für ein Packmittel verwendet wird, kann hierbei gezielt auf die in dem Packmittel aufzubewahrenden Produkte abgestimmt werden. Neben pharmazeutischen Produkten können selbstverständlich auch andere Produkte in einem Packmittel mit einer entsprechenden Zusammensetzung verpackt oder aufbewahrt werden. Hierzu zählen insbesondere alle Produkte, die empfindlich gegenüber Licht oder Feuchtigkeit sind.

Die Begrifflichkeit der Koordinationsverbindung ist vorliegend als ein Oberbegriff für verschieden koordinierte Verbindungen zu verstehen. Hiervon sind solche Verbindungen umfasst, an denen eine Anzahl von Liganden an einem oder an mehreren Koordinationszentren - Zentralatome bzw. Zentralteilchen - koordiniert sind. So sind von den Koordinationsverbindungen "klassische" Komplexe mit einer Anzahl von an einem Koordinationszentrum koordinierten Liganden umfasst, bei denen die Liganden sowohl zwei oder mehrere Koordinationszentren verbrücken, als auch nicht verbrückend koordinieren (Monomere). Zusätzlich sind auch Koordinationsverbindungen umfasst, bei denen die Liganden zwei oder mehrere Koordinationszentren so verbrücken, dass eine polymer vernetzte Struktur aus alternierenden Koordinationszentren und Liganden entsteht.

Der Index n in der allgemeinen Formel $(M_xL_y)_n$ bezeichnet hierbei die Anzahl der jeweils aneinander gebundenen bzw. miteinander vernetzten Baueinheiten aus Metall und Ligand, die die jeweilige Koordinationsverbindung bilden, während x für die Anzahl an Koordinationszentren und y für die Anzahl an Liganden stehen. Bei einer Formel $(M_1L_6)_1$, also mit n=1, handelt es sich um einen "klassischen" Komplex mit einem Zentralatom und sechs an diesem koordinierten Liganden. Bei einer Formel $(M_1L_6)_{10}$, also mit n=10, sind zehn Baueinheiten aus Metall und Ligand mit jeweils einem Zentralatom und sechs an diesem koordinierten Liganden ein- oder mehrdimensional miteinander vernetzt.

Bevorzugt ist als Koordinationsverbindung ein Koordinationspolymer umfasst. Koordinationspolymere sind Verbindungen, die - je nach Anzahl der Koordinationszentren und nach Anzahl und Beschaffenheit der an den Koordinationszentren koordinierten Liganden - unterschiedlich miteinander vernetzen können. Sie können entweder eindimensional vernetzte Strukturen, also Ketten bzw.- Stränge ausbilden. Vorzugsweise bilden die Koordinationsverbindungen und zweckmäßigerweise die Koordinationspolymere eine mehrdimensionale Struktur, insbesondere ein mehrdimensionales Netzwerk oder eine strangartige Verknüpfung, aus. Unter einer mehrdimensionalen Struktur werden insbesondere zwei- oder dreidimensional verknüpfte Netzwerke verstanden. Die Koordinationszentren in Koordinationspolymeren sind hierzu vorzugsweise über verbrückende Liganden koordiniert.

Die als verbrückende Liganden fungierenden Liganden werden als "Linker" bezeichnet. Mithilfe solcher Linker werden beispielsweise dreidimensionale Raumnetze, sogenannte metallorganische Gerüststrukturen oder "MOFs" (Metal Organic Frameworks) gebildet. Diese Netze entstehen durch die Koordination mehrerer Koordinationszentren mit einer hinreichenden Anzahl von Liganden. Die Liganden sind aus metallischen Knotenpunkten, den sogenannten SBUs (Secondary Building Units) und organischen Molekülen (Linkern) als Verbindungselementen zwischen den Knotenpunkten aufgebaut.

Als verbrückende Liganden, die durch Koordination an die entsprechenden Koordinationszentren ein-, zwei- oder dreidimensionale Netzwerke bilden, werden bevorzugt Liganden auf Basis von heterozyklischen und homozyklischen Aromaten eingesetzt. Weiter von Vorteil ist die Koordination der Koordinationszentren mittels terminaler stickstoffhaltiger, sauerstoffhaltiger oder schwefelhaltiger Liganden, wobei terminale Liganden nicht zu einem weiteren Koordinationszentrum verknüpfen.

Vorzugsweise ist das oder jedes Koordinationszentrum M der Koordinationsverbindung ausgewählt aus einer Gruppe, die Magnesium (Mg), Calcium (Ca), Strontium (Sr), Barium (Ba), Scandium (Sc), Yttrium (Y), Lanthan (La), Cer (Ce), Praseodym (Pr), Neodym (Nd), Samarium (Sm), Europium (Eu), Gadolinium (Gd), Terbium (Tb), Dysprosium (Dy), Holmium (Ho), Erbium (Er), Thulium (Tm), Ytterbium (Yb), Lutetium (Lu), Aluminium (Al), Gallium (Ga), Indium (In) und Bismuth (Bi) enthält. Die Koordinationszentren sind zweckmäßigerweise ionischer Natur, also ionische Metallzentren. Sie können zur Herstellung einer gewünschten Koordinationsverbindung beispielsweise in Form von Halogenidsalzen oder als reine metallische Elemente mir den jeweiligen Liganden vermengt und umgesetzt werden.

Insbesondere sind als Liganden L solche geeignet, die ausgewählt sind aus einer Gruppe, die Azole, die zugehörigen, deprotonierten Azolate, Pyridine und Azine enthält. Besonders bevorzugt sind die Liganden L ausgewählt aus einer Gruppe, die 1H-Pyrrol (PyrH), 1H-Imidazol (ImH), 1 H-Pyrazol (PzH), 1 H-1,2,3-Triazol (tz*H), 1 H-1,2,4-Triazol (tzH), Thiazol (thz), Azol-1H⁺, Pyridin, 4,4'-Bipyridin, 4,4'-Dipyridylethan (dpa), 4,4'-Dipyridylethen (dpe), 4,4'-Dipyridylethin (dpi) und Pyrazin (Pyz) enthält. Die Liganden sind an dem oder den jeweils vorhandenen Koordinationszentren koordiniert und bilden so die entsprechenden Koordinationsverbindungen aus.

Bevorzugt umfasst die Zusammensetzung eine Koordinationsverbindung, die ausgewählt ist aus einer Gruppe, die $^{1}_{\infty}$[LnCl$_3$(dpe)(py)]•0,5-2(dpe.py), $^{2}_{\infty}$[Ln$_2$Cl$_6$(dpe)$_3$(py)$_2$]•dpe, $^{1}_{\infty}$[Ln$_2$Cl$_6$(dpe)$_2$(thz)$_4$]·dpe, $^{1}_{\infty}$[LnCl$_3$(dpe)(thz)$_2$]·thz, $^{2}_{\infty}$[LnCl$_3$(tz)$_2$(thz)]•(thz), $^{1}_{\infty}$[LnCl$_3$(thz)$_3$]·thz, [Ln$_2$Cl$_6$(thz)$_8$]·3thz, [Ln$_2$Cl$_6$(thz)$_8$], [LnCl$_3$(thz)$_4$]·0.5-2(thz), $^{3}_{\infty}$[LnCl$_3$(dpa)$_2$]•(thz), $^{3}_{\infty}$[AE$_{1-x}$Eu$_x$(Im)$_2$], $^{2}_{\infty}$[Ln$_2$Cl$_6$(4,4'Bipy)]•2(4,4'-Bipy), $^{1}_{\infty}$[LnCl$_3$(4,4'-Bipy)(py)$_2$]•(py), $^{2}_{\infty}$[Ln$_2$Cl$_6$(4,4'Bipy)$_4$]•(py), $^{3}_{\infty}$[LnCl$_3$(dpa)]•0,5-2(thz), $^{3}_{\infty}$[LnCl$_3$(dpa)]•0,5-4(thz), $^{3}_{\infty}$[LnCl$_3$(dpa)]•0,5-2(py), $^{1}_{\infty}$[LnCl$_3$(bipy)(py)$_2$]•(py), $^{1}_{\infty}$[Ln$_2$Cl$_5$(bipy)$_2$(py)$_4$]- $^{1}_{\infty}$[LnCl$_4$(bipy)], $^{2}_{\infty}$[Ln$_2$Cl$_6$(bipy)$_5$]•4(bipy)), $^{3}_{\infty}$[Ln(Im)$_3$ImH], $^{3}_{\infty}$[Ln(Im)$_3$ImH]•ImH, $^{3}_{\infty}$[Ln$_3$(Im)$_9$(ImH)$_2$]·2ImH, $^{3}_{\infty}$[Ln$_2$(Im)$_6$(ImH)$_{1.5}$]·0.5ImH, $^{3}_{\infty}$[Ln(Im)$_3$] sowie [Ln$_2$Cl$_6$(pyz)$_4$] und [Bi$_{(2-x)}$Ln$_x$Cl$_6$(pyz)$_4$] enthält.

Ln bezeichnet Ionen der Elemente der Lanthanide und umfasst bevorzugt Lanthan (La), Cer (Ce), Praseodym (Pr), Neodym (Nd), Samarium (Sm), Europium (Eu), Gadolinium (Gd) und Terbium (Tb), Dysprosium (Dy), Holmium (Ho), Erbium (Er), Thulium (Tm) und Lutetium (Lu). Alternativ oder zusätzlich können auch solche Koordinationsverbindungen eingesetzt werden, die als Koordinationszentrum M anstelle von Ln Ionen der Elemente der 13. Gruppe des Periodensystems und/oder der Elemente der Erdalkalimetalle (AE) umfassen. Besonders bevorzugt können Koordinationsverbindungen mit Aluminium (Al), Gallium (Ga), Indium (In), Bismuth (Bi), Magnesium (Mg), Calcium (Ca), Strontium (Sr) und Barium (Ba) als Koordinationszentrum M eingesetzt werden. Der die Anzahl der jeweils aneinander gebundenen bzw. miteinander vernetzten Baueinheiten aus Metall und Ligand bezeichnende Index n, hat hierbei vorzugsweise einen Wert zwischen x = 0,01 und x = 1.

Allen Koordinationsverbindungen, unabhängig davon, ob sie Komplexcharakter aufweisen oder als Koordinationspolymere ein- oder mehrdimensionale Netze bilden, ist deren intrinsische lumineszierende Eigenschaften gemein, die es ermöglicht, bei deren Einsatz als Teil einer Zusammensetzung die Qualität die Herkunft und die Haltbarkeit des jeweiligen pharmazeutischen Produktes zu ermitteln bzw. sicherzustellen. Zusätzlich wird bei einer Zusammensetzung auf Basis von Koordinationsverbindungen die Einbringbarkeit in organische Polymermatrizen des Packmaterials gegenüber herkömmlichen Phosphoren erweitert bzw. erhöht. Dabei erlaubt die Verwendung von organischen Liganden mit Azol- und Pyridincharakter eine verbesserte Akzeptanz insbesondere betreffend die Eigenschaften der Polymermatrix gegenüber herkömmlichen Phosphoren auf Basis von Oxiden oder Nitriden. Diese rührt von der chemischen Ähnlichkeit der organischen Liganden im Vergleich zu den organischen Polymematrizen her. Herkömmliche anorganische Phosphore zeigen diese Ähnlichkeit organischer Baugruppen nicht. Das Packmaterial ist vorzugsweise mit der Zusammensetzung beschichtet, die die oder jede Koordinationsverbindung enthält. Die Beschichtung erfolgt vorzugsweise als dünne, auf das Packmittel aufgetragene Schicht, so dass die Beschaffenheit des Packmittels, wie beispielsweise die Transparenz erhalten bleibt. Die Beschichtung kann vollflächig oder auch nur auf Teilflächen erfolgen. Je nach Herstellungsverfahren des Packmittels und anhängig von den in der Zusammensetzung eingesetzten Koordinationsverbindungen kann es ebenfalls vorteilhaft sein, wenn die Zusammensetzung in das Packmaterial eingebracht ist. Eine solche Einbringung kann beispielsweise direkt bei der Herstellung des Packmaterials erfolgen, so dass eine zusätzliche Beschichtung entfallen kann.

Aufgrund ihrer Lumineszenzeigenschaften eignen sich Zusammensetzungen mit den entsprechenden Koordinationsverbindungen insbesondere im Bereich der Sensorik. In einer besonders vorteilhaften Ausgestaltung wird die Zusammensetzung als ein Echtheitssensor eingesetzt. Ein solcher Sensor, also die auf das Packmittel aufgebrachte oder in dieses eingebrachte Zusammensetzung, fungiert als ein UV-Sensor und ist in der Lage, einfallendes Licht in einem bestimmten Wellenlängenbereich zu absorbieren und schließlich wieder zu emittieren. Die emittierte Strahlung kann dabei von Wellenlängen im UV-Bereich (200 nm bis 380 nm) über den sichtbaren Bereich (380 nm bis 750 nm) bis in den infraroten Bereich reichen (750 nm bis 3000 nm). Die Absorption und die resultierende Emission sind hierbei spezifisch für die verwendete Zusammensetzung, also für die in der Zusammensetzung enthaltenen Koordinationsverbindungen.

Aufgrund der spezifische Emissionen und Emissionsspektren der Koordinationsverbindungen im sichtbaren Spektrum des Lichts lassen sich auf ein Packmittel aufgebrachte Zusammensetzungen als ein Logo, ein Label oder ein Barcode auslesen. So kann schnell und einfach die Echtheit eines pharmazeutischen Produktes anhand des Packmaterials verifiziert werden. Mit anderen Worten lässt sich eine solche Zusammensetzung in Form eines "anti counterfeiting labels" als ein Sicherheitsmerkmal für die pharmazeutischen Produkte einsetzen und kann die Fälschungssicherheit deutlich erhöhen. Durch den Einsatz von Matrizen kann hierbei ein Label kreiert werden, das bei UV-Einstrahlung luminesziert und so eine schnelle Verifizierung der Echtheit der jeweiligen pharmazeutischen Produkte garantiert.

Die Funktion als UV-Sensor - also als Sicherheitsmerkmal bzw. Echtheitssensor der Zusammensetzung - basiert auf der spezifischen Lumineszenz der eingesetzten Koordinationsverbindungen. Hierbei kommt es bei einer Anregung, zweckmäßigerweise über UV-Strahlung, zur Absorption und anschließender Emission längerwelliger Strahlung. Die Absorptionswellenlängen und Emissionswellenlängen sind hierbei abhängig von dem Koordinationszentrum und den entsprechenden an dem Koordinationszentrum koordinierten Liganden jeder Koordinationsverbindung. Das emittierte Licht kann bei je nach ausgewählter Koordinationsverbindung im UV-Bereich zwischen 200 nm und 380 nm, im VIS-Bereich zwischen 380 nm und 750 nm oder im NIR-Bereich zwischen 780 nm und 3 $\mu$m liegen.

Die Produktechtheit kann vorzugsweise mit Hilfe handelsüblicher UV-Lampen überprüft werden. Hierzu wird ein mit einer Zusammensetzung versehenes Packmittel mit UV-Licht bestrahlt, die entsprechenden in der Zusammensetzung enthaltenen Koordinationsverbindungen angeregt und anhand bekannter Emissionsspektren identifiziert. Zusätzlich kann auch durch das Design eines lumineszierenden Labels oder Barcodes die Fälschungssicherheit weiter erhöht werden, indem beispielsweise Chargen oder einzelne Produkte mit den entsprechenden lumineszierenden Logos, bzw. mit Logos, die aufgrund der Zusammensetzung lumineszierende Eigenschaften aufweisen, gekennzeichnet werden. Diese können dann einfach mit einem Scanner ausgelesen werden.

Zur Verwendung als UV-Sensor für ein Packmittel eignet sich insbesondere eine Zusammensetzung, die eine Koordinationsverbindung, die ausgewählt ist aus einer Gruppe, die ${}^1_\infty[\text{LnCl}_3(\text{dpe})(\text{py})]\cdot 0{,}5\text{-}2(\text{dpe.py})$, ${}^2_\infty[\text{Ln}_2\text{Cl}_6(\text{dpe})_3(\text{py})_2]\cdot\text{dpe}$, ${}^1_\infty[\text{Ln}_2\text{Cl}_6(\text{dpe})_2(\text{thz})_4]\cdot\text{dpe}$, ${}^1_\infty[\text{LnCl}_3(\text{dpe})(\text{thz})_2]\cdot\text{thz}$, ${}^2_\infty[\text{LnCl}_3(\text{tz})_2(\text{thz})]\bullet(\text{thz})$, ${}^1_\infty[\text{LnCl}_3(\text{thz})_3]\cdot\text{thz}$, $[\text{Ln}_2\text{Cl}_6(\text{thz})_8]\cdot 3\text{thz}$, $[\text{Ln}_2\text{Cl}_6(\text{thz})_8]$, $[\text{LnCl}_3(\text{thz})_4]\cdot 0.5\text{-}2(\text{thz})$, ${}^3_\infty[\text{LnCl}_3(\text{dpa})_2]\bullet(\text{thz})$, ${}^3_\infty[\text{AE}_{1-x}\text{Eu}_x(\text{Im})_2]$, ${}^2_\infty[\text{Ln}_2\text{Cl}_6(4{,}4'\text{Bipy})]\bullet 2(4{,}4'\text{-Bipy})$, ${}^1_\infty[\text{LnCl}_3(4{,}4'\text{-Bipy})(\text{py})_2]\bullet(\text{py})$, ${}^2_\infty[\text{Ln}_2\text{Cl}_6(4{,}4'\text{Bipy})_4]\bullet(\text{py})$, ${}^3_\infty[\text{LnCl}_3(\text{dpa})]\bullet 0{,}5\text{-}2(\text{thz})$, ${}^3_\infty[\text{LnCl}_3(\text{dpa})]\bullet 0{,}5\text{-}4(\text{thz})$, ${}^3_\infty[\text{LnCl}_3(\text{dpa})]\bullet 0{,}5\text{-}2(\text{py})$, ${}^1_\infty[\text{LnCl}_3(\text{bipy})(\text{py})_2]\bullet(\text{py})$, ${}^1_\infty[\text{Ln}_2\text{Cl}_5(\text{bipy})_2(\text{py})_4]$, ${}^1_\infty[\text{LnCl}_4(\text{bipy})]$, ${}^2_\infty[\text{Ln}_2\text{Cl}_6(\text{bipy})_5]\bullet 4(\text{bipy})$, ${}^3_\infty[\text{Ln}(\text{Im})_3\text{ImH}]$, ${}^3_\infty[\text{Ln}(\text{Im})_3\text{ImH}]\bullet\text{ImH}$, ${}^3_\infty[\text{Ln}_3(\text{Im})_9(\text{ImH})_2]\cdot 2\text{ImH}$, ${}^3_\infty[\text{Ln}_2(\text{Im})_6(\text{ImH})_{1.5}]\cdot 0.5\text{ImH}$, ${}^3_\infty[\text{Ln}(\text{Im})_3]$ sowie $[\text{Ln}_2\text{Cl}_6(\text{pyz})_4]$ und $[\text{Bi}_{(2-x)}\text{Ln}_x\text{Cl}_6(\text{pyz})_4]$ enthält.

Auch hier bezeichnet Ln Ionen der Elemente der Lanthanide und umfasst vorzugsweise Lanthan (La), Cer (Ce), Praseodym (Pr), Neodym (Nd), Samarium (Sm), Europium (Eu), Gadolinium (Gd) und Terbium (Tb), Dysprosium (Dy), Holmium (Ho), Erbium (Er), Thulium (Tm) und Lutetium (Lu). Alternativ oder zusätzlich können auch solche Koordinationsverbindungen eingesetzt werden, die als Koordinationszentrum M anstelle von Ln Ionen der Elemente der 13. Gruppe des Periodensystems umfassen. Besonders bevorzugt können Koordinationsverbindungen mit Aluminium (Al), Gallium (Ga), Indium (In) und Bismuth (Bi) als Zentralatom bzw. Koordinationszentrum M eingesetzt werden. Auch Magnesium (Mg), Calcium (Ca), Strontium (Sr) und Barium (Ba), die die Elemente der Erdalkalimetalle (AE) repräsentieren, können als Koordinationszentrum M eingesetzt werden. Der Index n liegt vorzugsweise in einem Bereich zwischen $x = 0{,}01$ und $x = 1$.

In einer weiter vorteilhaften Ausgestaltung - ebenfalls auf dem Gebiet der Sensorik - wird die Zusammensetzung als ein Feuchtigkeitssensor eingesetzt. Eine als Feuchtigkeitssensor einsetzbare Zusammensetzung ermöglicht die Erfassung der Degradation hydrolyseempfindlicher pharmazeutischer Formulierungen durch in ein Packmittel diffundierendes Wasser. Hierbei wird der Verlust oder die Veränderung der Lumineszenz der eingesetzten Zusammensetzung, bzw. der Lumineszenz der Koordinationsverbindungen genutzt, um indirekt die Degradation eines Wirkstoffes nachzuweisen. Im Fall eines Kontaktes des mit der Zusammensetzung versehenen Packmittels mit Wasser reagiert die Zusammensetzung im Verlauf der Lagerdauer mit in das Packmittel hinein diffundierendem Wasser. Durch die Hydrolyse der Koordinationsverbindung kommt es zu einem Verlust oder einer Änderung der Lumineszenz der Zusammensetzung, also des Feuchtigkeitssensors. So kann die reale verbleibende Haltbarkeit des Arzneimittels angezeigt werden. Durch die gezielte Kombination verschiedener Koordinationszentren und/oder Liganden können die Hydrolyseempfindlichkeit und die Degradationsgeschwindigkeiten der Zusammensetzung beliebig an die Eigenschaften des pharmazeutischen Produktes bzw. eines Arzneimittels angepasst werden, ohne dass die als Feuchtigkeitssensor wirkende Zusammensetzung und der Wirkstoff direkt miteinander reagieren bzw. zu einer Veränderung des Wirkstoffes führen. Erfasst wird einzig die Hydrolyse der Formulierung. So können insbesondere von starren Haltbarkeitsfristen bzw. Verfallsdaten unabhängige, reale Haltbarkeitsdaten von pharmazeutischen Produkten anhand der Kontrolle der Lumineszenz überprüft werden.

So kommt es bei Lanthanid-Ionen als Koordinationszentren aufgrund ihrer hohen Oxophilie, also der Neigung Bindungen zu Sauerstoffatomen auszubilden, bei Exposition der Koordinationsverbindungen mit Wasser, wie zum Beispiel Luftfeuchtigkeit, zur Degradation des die Zentren umgebenden chemischen Gerüstes. Diese Umwandlungen bedingen einen Verlust an Lumineszenz der Zusammensetzung, dass diese an die chemische Umgebung des Koordinationszentrums gebunden ist. Hierbei ist es möglich, mit verschiedenen reinen Koordinationsverbindungen oder mit einer Kombinationen mehrerer Koordinationsverbindungen unterschiedlich empfindliche Sensorsysteme zu kreieren, da die Systeme bzw. die Zusammensetzungen je nach eingesetzten Koordinationsverbindungen über unterschiedliche Hydrolysegeschwindigkeiten und Schwellenwerte, ab welchem der Sensor reagiert, verfügen.

Mit anderen Worten können die Empfindlichkeit und der Schwellenwert des Feuchtigkeitssensors oder Hydrolysesensor über die Auswahl der Koordinationsverbindungen, sowie über deren Menge frei eingestellt werden und so optimal an die Anforderungen des Wirkstoffes angepasst werden. Durch die Korrelation von Koordinationsverbindungen mit Arzneimitteln, die über eine ähnliche Hydrolyseempfindlichkeit und Degradationsgeschwindigkeit verfügen, ist eine visuelle Sichtung der Qualität und der Haltbarkeit eines pharmazeutischen Produktes möglich.

Die Sichtung kann dabei insbesondere mit dem Auge, einem Photometer oder mit einem Photolumineszenzspektrometer erfolgen, mit in der genannten Reihenfolge ansteigender Empfindlichkeit der sensorischen Erfassung. Sie reicht somit vom rein visuellen Ergebnis bis hin zu einer quantitativen Bestimmung.

Zur Verwendung als Feuchtigkeitssensor für ein Packmittel eignet sich bevorzugt eine Zusammensetzung, die ausgewählt ist aus einer Gruppe, die ${}^1_\infty[LnCl_3(dpe)(py)]\cdot0,5\text{-}2(dpe.py)$, ${}^2_\infty[Ln_2Cl_6(dpe)_3(py)_2]\cdot dpe$, ${}^1_\infty[Ln_2Cl_6(dpe)_2(thz)_4]\cdot dpe$, ${}^1_\infty[LnCl_3(dpe)(thz)_2]\cdot thz$, ${}^2_\infty[LnCl_3(thz)_2(thz)]\cdot(thz)$, ${}^1_\infty[LnCl_3(thz)_3]\cdot thz$, $[Ln_2Cl_6(thz)_8]\cdot3thz$, $[Ln_2Cl_6(thz)_8]$, $[LnCl_3(thz)_4]\cdot0.5\text{-}2(thz)$, ${}^3_\infty[LnCl_3(dpa)_2]\cdot(thz)$, ${}^3_\infty[AE_{1-x}Eu_x(Im)_2]$, ${}^2_\infty[Ln_2Cl_6(4,4'Bipy)]\cdot2(4,4'\text{-Bipy})$, ${}^1_\infty[LnCl_3(4,4'\text{-Bipy})(py)_2]\cdot(py)$, ${}^2_\infty[Ln_2Cl_6(4,4'Bipy)_4]\cdot(py)$, ${}^3_\infty[LnCl_3(dpa)]\cdot0,5\text{-}2(thz)$, ${}^3_\infty[LnCl_3(dpa)]\cdot0,5\text{-}4(thz)$, ${}^3_\infty[LnCl_3(dpa)]\cdot0,5\text{-}2(py)$, ${}^1_\infty[LnCl_3(bipy)(py)_2]\cdot(py)$, ${}^1_\infty[Ln_2Cl_5(bipy)_2(py)_4]\text{-}\,{}^1_\infty[LnCl_4(bipy)]$, ${}^2_\infty[Ln_2Cl6(bipy)_5]\cdot4(bipy))$, ${}^3_\infty[Ln(Im)_3ImH]$, ${}^3_\infty[Ln(Im)_3ImH]\cdot ImH$, ${}^3_\infty[Ln_3(Im)_9(ImH)_2]\cdot2ImH$, ${}^3_\infty[Ln_2(Im)_6(ImH)_{1.5}]\cdot0.5ImH$, ${}^3_\infty[Ln(Im)_3]$ sowie $[Ln_2Cl_6(pyz)_4]$ und $[Bi_{(2-x)}Ln_xCl_6(pyz)_4]$. enthält.

Ln bezeichnet vorliegend ebenfalls Ionen der Elemente der Lanthanide und umfasst vorzugsweise Lanthan (La), Cer (Ce), Praseodym (Pr), Neodym (Nd), Samarium (Sm), Europium (Eu), Gadolinium (Gd) und Terbium (Tb), Dysprosium (Dy), Holmium (Ho), Erbium (Er), Thulium (Tm) und Lutetium (Lu). Alternativ oder zusätzlich können auch solche Koordinationsverbindungen eingesetzt werden, die als Koordinationszentrum M - anstelle von Ln - Ionen der Elemente der 13. Gruppe des Periodensystems, insbesondere Aluminium (Al), Gallium (Ga), Indium (In) und Bismuth (Bi), umfassen. Auch Magnesium (Mg), Calcium (Ca), Strontium (Sr) und Barium (Ba) können als Elemente der Erdalkalimetalle (AE) als Koordinationszentrum M eingesetzt werden. Der Index n liegt vorzugsweise in einem Bereich zwischen x = 0,01 und x = 1.

Insbesondere ist es auch möglich, eine Zusammensetzung einzusetzen, die die sensorischen Eigenschaften der ausgewählten Koordinationsverbindungen derart kombiniert, dass die Zusammensetzung beispielsweise UV-Strahlung absorbiert und so als ein Sicherheitsmerkmal für eine Echtheitsprüfung genutzt werden kann und gleichzeitig als Feuchtigkeitssensor nutzbar ist, der Aufschluss über die Hydrolyse der Zusammensetzung und damit deren Haltbarkeit gibt.

Eine solche Zusammensetzung umfasst vorzugsweise Koordinationsverbindungen, die ausgewählt sind aus einer Gruppe, die ${}^1_\infty[LnCl_3(dpe)(py)]\cdot0,5\text{-}2(dpe.py)$, ${}^2_\infty[Ln_2Cl_6(dpe)_3(py)_2]\cdot dpe$, ${}^1_\infty[Ln_2Cl_6(dpe)_2(thz)_4]\cdot dpe$, ${}^1_\infty[LnCl_3(dpe)(thz)_2]\cdot thz$, ${}^2_\infty[LnCl_3(tz)_2(thz)]\cdot(thz)$, ${}^1_\infty[LnCl_3(thz)_3]\cdot thz$, $[Ln_2Cl_6(thz)_8]\cdot3thz$, $[Ln_2Cl_6(thz)_8]$, $[LnCl_3(thz)_4]\cdot0.5\text{-}2(thz)$, ${}^3_\infty[LnCl_3(dpa)_2]\cdot(thz)$, ${}^3_\infty[AE_{1-x}Eu_x(Im)_2]$, ${}^2_\infty[Ln_2Cl_6(4,4'Bipy)]\cdot2(4,4'\text{-Bipy})$, ${}^1_\infty[LnCl_3(4,4'\text{-Bipy})(py)_2]\cdot(py)$, ${}^2_\infty[Ln_2Cl_6(4,4'Bipy)_4]\cdot(py)$, ${}^3_\infty[LnCl_3(dpa)]\cdot0,5\text{-}2(thz)$, ${}^3_\infty[LnCl_3(dpa)]\cdot0,5\text{-}4(thz)$, ${}^3_\infty[LnCl_3(dpa)]\cdot0,5\text{-}2(py)$, ${}^1_\infty[LnCl_3(bipy)(py)_2]\cdot(py)$, ${}^1_\infty[Ln_2Cl_5(bipy)_2(py)_4]\text{-}\,{}^1_\infty[LnCl_4(bipy)]$, ${}^2_\infty[Ln_2Cl_6(bipy)_5]\cdot4(bipy))$, ${}^3_\infty[Ln(Im)_3ImH]$, ${}^3_\infty[Ln(Im)_3ImH]\cdot ImH$, ${}^3_\infty[Ln_3(Im)_9(ImH)_2]\cdot2ImH$, ${}^3_\infty[Ln_2(Im)_6(ImH)_{1.5}]\cdot0.5ImH$, ${}^3_\infty[Ln(Im)_3]$ sowie $[Ln_2Cl_6(pyz)_4]$ und $[Bi_{(2-x)}Ln_xCl_6(pyz)_4]$ umfasst.

Ln steht vorliegend ebenfalls für die Ionen der Elemente der Lanthanide und umfasst vorzugsweise Lanthan (La), Cer (Ce), Praseodym (Pr), Neodym (Nd), Samarium (Sm), Europium (Eu), Gadolinium (Gd) und Terbium (Tb), Dysprosium (Dy), Holmium (Ho), Erbium (Er), Thulium (Tm) und Lutetium (Lu).

Für den alternativen Einsatz eignen sich auch bei einer Zusammensetzung, die gleichzeitig mehrere Funktionen erfüllt, solche Koordinationsverbindungen, die als Koordinationszentrum M anstelle von Ln auch Ionen der Elemente der 13. Gruppe des Periodensystems und/oder der Elemente der Erdalkalimetalle (AE)umfassen. Besonders bevorzugt können Koordinationsverbindungen mit Aluminium (Al), Gallium (Ga), Indium (In), Bismuth (Bi), Magnesium (Mg), Calcium (Ca), Strontium (Sr) und Barium (Ba) als Koordinationszentrum M eingesetzt werden. Der Index n hat hierbei ebenfalls einen Wert, der vorzugsweise zwischen x = 0,01 und 1 liegt. In einer besonders vorteilhaften Ausgestaltung der Erfindung lässt sich die Zusammensetzung als Lichtschutz verwenden. Die Zusammensetzung bzw. die in der Zusammensetzung enthaltenen Koordinationsverbindungen dienen als UV-Absorber, dessen Absorptionsbereich durch den Einsatz und die Kombination verschiedener zur Verfügung stehender Koordinationszentren und verbrückender Liganden an das zu schützende pharmazeutische Produkt angepasst werden kann. Die Schutzfunktion einer solchen Zusammensetzung ergibt sich daraus, dass das auf ein Packmittel einfallende Licht nicht bis zum pharmazeutischen Produkt vordringen kann bzw. in seiner Intensität stark verringert wird. Stattdessen wird durch die Absorption der Strahlung ein Durchdringen des Packmittels verhindert und so eine unerwünschte Veränderung bzw. Schädigung der Formulierung eines pharmazeutischen Produktes verhindert.

Hierbei werden vorzugsweise zwei Arten von UV-Absorbern unterschieden. Zum einen kann die Zusammensetzung derart beschaffen sein, dass die absorbierte UV-Strahlung anteilig in eine Emission im sichtbaren Spektrum des Lichts umgewandelt wird. Alternativ kann eine Zusammensetzung verwendet werden, die die absorbierte UV-Strahlung im Infrarotbereich strahlungsfrei abgibt. Auch eine Kombination ist möglich, wenn eine Zusammensetzung eingesetzt wird, deren Koordinationsverbindungen unterschiedliche spektroskopische Eigenschaft aufweist.

Die aufgrund ihres Absorptionsvermögens des UV-Lichtes als Lichtschutz fungierenden Zusammensetzungen decken zweckmäßigerweise einen breiten Wellenlängenbereich ab und zeigen eine große Varianz bei den möglichen Absorptions- und Emissionswellenlängen. Vorzugsweise erstreckt sich hierbei die mögliche Absorption über den gesamten Bereich der UV-A und UV-B-Strahlung. Die Emission ist über das gesamte Spektrum des VIS-Bereiches bis hin zum NIR möglich.

In einer besonders vorteilhaften Ausgestaltung wird eine Zusammensetzung verwendet, die aufgrund einer Mehrzahl unterschiedlicher Koordinationsverbindungen Strahlung über einen breiten Wellenlängenbereich absorbiert. Auf diese Weise ist die Darstellung eines Breitbandabsorbers möglich. Ein solcher Breitbandabsorber, absorbiert aufgrund der in der Zusammensetzung enthaltenen Koordinationsverbindungen die energiereiche Strahlung vorzugsweise im gesamten UV-Bereich oder in einem bestimmten Teil des UV-Bereichs und eignet sich so besonders zum Schutz photolabiler Substanzen wie Arzneimitteln. Alternativ kann eine Zusammensetzung eingesetzt werden, die ein oder mehrere unterschiedliche Koordinationsverbindungen enthält, die wiederum gemeinsam mit herkömmlichen Absorbern wie Glas im gesamten UV-Bereich Strahlung absorbieren.

Eine erweiterte Haltbarkeit der UV-Absorber unter Einwirkung von UV-Licht gegenüber kommerziellen organischen Verbindungen ist durch die zusätzlichen Metall- Ligandbindungen gegeben und durch die Energiekonversion und Emission als unschädliches Licht verstärkt.

Zur Verwendung als Lichtschutz für ein Packmittel ist insbesondere eine Zusammensetzung geeignet, die eine Koordinationsverbindung aus der Gruppe umfasst, die $_\infty^1$[LnCl$_3$(dpe)(py)]•0,5-2(dpe.py), $_\infty^2$[Ln$_2$Cl$_6$(dpe)$_3$(py)$_2$]·dpe, $_\infty^1$[Ln$_2$Cl$_6$(dpe)$_2$(thz)$_4$]·dpe, $_\infty^1$[LnCl$_3$(dpe)(thz)$_2$]·thz, $_\infty^2$[LnCl$_3$(tz)$_2$(thz)]•(thz), $_\infty^1$[LnCl$_3$(thz)$_3$]·thz, [Ln$_2$Cl$_6$(thz)$_8$]·3thz, [Ln$_2$Cl$_6$(thz)$_8$], [LnCl$_3$(thz)$_4$]·0.5-2(thz), $_\infty^3$[LnCl$_3$(dpa)$_2$]•(thz), $_\infty^3$[AE$_{1-x}$Eu$_x$(Im)$_2$], [Ln$_2$Cl$_6$(4,4'Bipy)]•2(4,4'-Bipy), $_\infty^1$[LnCl$_3$(4,4'-Bipy)(py)$_2$]•(py), $_\infty^2$[Ln$_2$Cl$_6$(4,4'Bipy)$_4$]•(py), $_\infty^3$[LnCl$_3$(dpa)]•0,5-2(thz), $_\infty^3$[LnCl$_3$(dpa)]•0,5-4(thz), $_\infty^3$[LnCl$_3$(dpa)]•0,5-2(py), $_\infty^1$[LnCl$_3$(bipy)(py)$_2$]•(py), $_\infty^1$[Ln$_2$Cl$_5$(bipy)$_2$(py)$_4$]-$_\infty^1$LnCl$_4$(bipy)], $_\infty^2$[Ln$_2$Cl$_6$(bipy)$_5$]•4(bipy)), $_\propto^3$[Ln(Im)$_3$ImH], $_\propto^3$[Ln(Im)$_3$ImH]•ImH, $_\propto^3$[Ln$_3$(Im)$_9$(ImH)$_2$]·2ImH, $_\propto^3$[Ln$_2$(Im)$_6$(ImH)$_{1.5}$]·0.5ImH, $_\propto^3$[Ln(Im)$_3$] sowie [Ln$_2$Cl$_6$(pyz)$_4$] und [Bi$_{(2-x)}$Ln$_x$Cl$_6$(pyz)$_4$] umfasst.

Wie auch bei der Verwendung der Zusammensetzung als Feuchtigkeitssensor und/oder als Echtheitssensor können alternativ zu den vorbenannten Koordinationsverbindungen auch hier solche Koordinationsverbindungen eingesetzt werden, die als Zentralatom bzw. Zentralteilchen M anstelle von Ln auch Ionen der Elemente der 13. Gruppe des Periodensystems und/oder der Elemente der Erdalkalimetalle (AE) umfassen. Besonders bevorzugt können Koordinationsverbindungen mit Aluminium (Al), Gallium (Ga), Indium (In), Bismuth (Bi), Magnesium (Mg), Calcium (Ca), Strontium (Sr) und Barium (Ba) als Zentralatom bzw. Zentralteilchen M eingesetzt werden. Der Wert des Index n liegt insbesondere zwischen x = 0,01 undx=1.

Insgesamt kann durch die gezielte Auswahl und Kombination der Koordinationsverbindungen eine Zusammensetzung bereitgestellt werden, die sich entweder zum Schutz eines insbesondere pharmazeutischen Produktes eignet und - zusätzlich oder alternativ - verlässliche Aussagen bezüglich der Haltbarkeit und der Produktechtheit ermöglicht.

Die zweite Aufgabe der Erfindung wird erfindungsgemäß gelöst durch ein Packmittel, insbesondere für ein pharmazeutisches Produkt, umfassend eine Zusammensetzung, die zumindest eine Koordinationsverbindung der allgemeinen Formel $(M_xL_y)_n$ mit zumindest einem Koordinationszentrum M, sowie mit einer Anzahl von an dem oder jedem Koordinationszentrum koordinierten Liganden L umfasst, wobei das oder jedes Koordinationszentrum M ausgewählt ist aus einer Gruppe, die Erdalkalimetalle, Selten-Erd-Metalle und Metalle der 13. Gruppe und der 15. Gruppe des Periodensystems enthält.

Ein Packmaterial mit einer solchen Zusammensetzung bietet durch die gezielte Auswahl und/oder Kombination der in der Zusammensetzung enthaltenen Koordinationsverbindungen die Möglichkeit, aufgrund der lumineszierenden Eigenschaften der oder jeder Koordinationsverbindung sowohl die Qualität als auch die Sicherheit empfindlicher Produkte auf einfache Weise zu kontrollieren.

Die Zusammensetzung kann hierbei sowohl auf Primär-, Sekundär und Tertiärpackmittel aufgebracht sein. Tertiärpackmittel oder Behältnisse bezeichnen hierbei sogenannte "logistische" Packmittel, wie Kartons, Paletten oder Schrumpffolien, die keinen direkten Kontakt zu einem Produkt haben. Sekundärpackmittel sind Umverpackungen, die zwar ebenfalls nicht in direktem Kontakt zu dem zu verpackenden Produkt stehen, die dennoch eine Schutz- und Kontrollfunktion übernehmen können. Primärpackmittel stehen stattdessen im direkten Produktkontakt und spielen entsprechend bei der Entwicklung pharmazeutischer Produkte eine bedeutende Rolle für die Qualität eines pharmazeutischen Produkts.

Bevorzugt ist die Zusammensetzung als ein Echtheitssensor eingesetzt. Ein Echtheitssensor erhöht die Fälschungssicherheit eines pharmazeutischen Produktes erhöht. Hierzu kann beispielsweise ein Label auf das Packmittel aufgebracht sein, welches bei UV-Strahlung luminesziert und so die Echtheit eines verpackten Produktes anzeigt. Vorzugsweise ist die Zusammensetzung als ein Feuchtigkeitssensor eingesetzt, der im Fall einer durch Feuchtigkeit bedingten Änderung anzeigt, dass das pharmazeutische Produkt nicht mehr verwendbar ist.

Weiter von Vorteil ist es, wenn die Zusammensetzung als ein Lichtschutz eingesetzt, so dass eine durch Strahlung bedingte Änderung der Formulierung eines im Packmittel aufbewahrten pharmazeutischen Produktes verhindert werden.

Die Sensortypen sind irreversibel, so dass eine falsche Detektion durch nachträgliche Trocknung ausgeschlossen ist. Dadurch wird auch eine fehlerhafte Bestimmung der Arzneimittelhaltbarkeit kann auf diese Weise durch das Packmittel vermieden werden.

Weitere vorteilhafte Ausgestaltungen für das Packmittel mit einer entsprechenden Zusammensetzung ergeben sich aus den auf die Verwendung der Zusammensetzung gerichteten Unteransprüchen. Die für die Verwendung genannten vorteilhaften Weiterbildungen können sinngemäß auf das Packmittel übertragen werden.

Im Folgenden werden Ausführungsbeispiele der Erfindung anhand einer Zeichnung näher erläutert. Dabei zeigen:

Fig. 1      ein Emissionsspektrum des Koordinationspolymers $^{1}_{\infty}[GdCl_3(dpe)(py)]\cdot 0,5(dpe,py)$,

Fig. 2      ein Emissionsspektrum des Koordinationspolymers $^{2}_{\infty}[EuCl_3(tz)_2(thz)]\cdot(thz)$,

Fig. 3      ein Emissionsspektrum des Koordinationspolymers $^{3}_{\infty}[NdCl_3(dpa)_2]\cdot(thz)$,

Fig. 4      ein lumineszierendes Label, dessen Zusammensetzung $^{3}_{\infty}[NdCl_3(dpa)_2]\cdot(thz)$ und $^{2}_{\infty}[EuCl_3(tz)_2(thz)]\cdot(thz)$ enthält, bei Tageslicht und unter UV-Einstrahlung,

Fig. 5      Emissionsspektren des Koordinationspolymers $^{3}_{\infty}[Sr_{0.9}Eu_{0.1}(Im)_2]$ unter Einfluss von Luftfeuchtigkeit

Fig. 6      die Intensitätsabnahme der Lumineszenz des $5d\rightarrow 4f$ Übergangs des Koordinationspolymers $^{3}_{\infty}[Sr_{0.9}Eu_{0.1}(Im)_2]$ gemäß Fig. 5,

Fig. 7 Emissionsspektren des Koordinationspolymers ${}_{\infty}^{2}[Tb_2Cl_6(4,4'Bipy)]\cdot 2(4,4'Bipy)$ unter Einfluss von Luftfeuchtigkeit,

Fig. 8 die Intensitätsabnahme der Lumineszenz aller Übergänge des Koordinationspolymers ${}_{\infty}^{2}[Tb_2Cl_6(4,4'Bipy)]\cdot 2(4,4'Bipy)$ gemäß Fig. 7,

Fig. 9 ein Anregungsspektrum des Koordinationspolymers ${}_{\infty}^{1}[DyCl_3(4,4'\text{-}bipy)(py)_2]\cdot py$,

Fig. 10 ein Emissionsspektrum des Koordinationspolymers ${}_{\infty}^{1}[DyCl_3(4,4'\text{-}bipy)(py)_2]\cdot py$,

Fig. 11 ein Anregungsspektrum des Koordinationspolymers ${}_{\infty}^{2}[Ce_2Cl_6(4,4'\text{-}bipy)_4]\cdot py$,

Fig. 12 ein Emissionsspektrum des Koordinationspolymers ${}_{\infty}^{2}[Ce_2Cl_6(4,4'\text{-}bipy)_4]\cdot py$,

Fig. 13 ein Anregungsspektrum des Koordinationspolymers ${}_{\infty}^{3}[TbCl_3(dpa)]\cdot thz$,

Fig. 14 ein Emissionsspektrum des Koordinationspolymers ${}_{\infty}^{3}[TbCl_3(dpa)]\cdot thz$,

Fig. 15 ein Anregungsspektrum des Koordinationspolymers ${}_{\infty}^{3}[YbCl_3(dpa)]\cdot thz$, sowie

Fig. 16 ein Emissionsspektrum des Koordinationspolymers ${}_{\infty}^{3}[YbCl_3(dpa)]\cdot thz$.

Die im Folgenden anhand ihrer Spektren beschriebenen Koordinationsverbindungen können jeweils alleine oder in Kombination in einer Zusammensetzung eingesetzt werden, die auf ein Packmaterial aufgebracht oder in dieses eingebracht wird, um so pharmazeutische Formulierungen bzw. Produkte hinsichtlich ihrer Haltbarkeit und der Produktechtheit charakterisieren zu können. Hierbei sind die Zusammensetzungen nicht auf die im Folgenden benannten Koordinationsverbindungen bzw. Koordinationspolymere beschränkt.

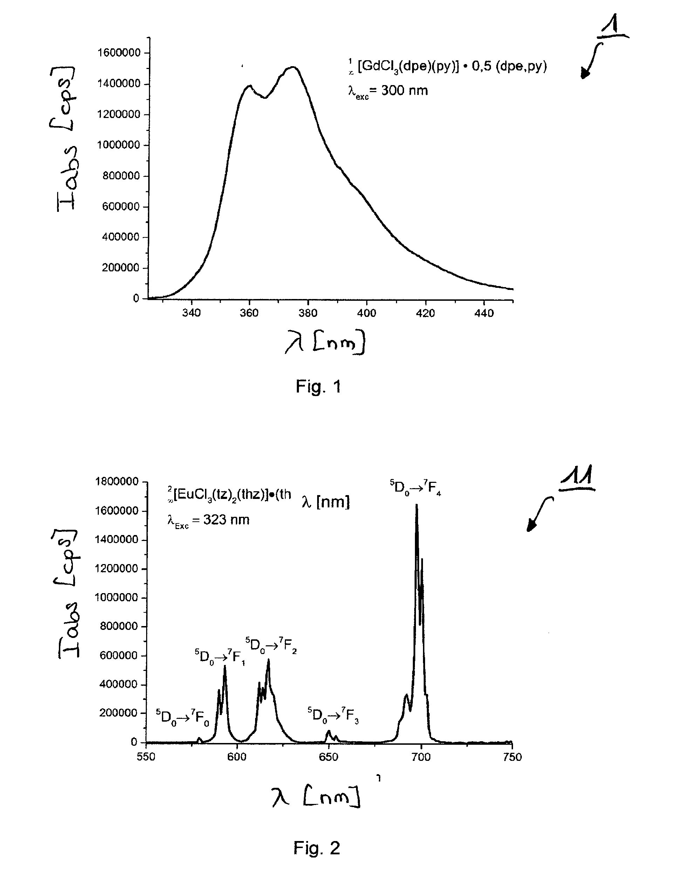

In Fig. 1 ist ein Emissionsspektrum 1 des ein eindimensional-verknüpften Koordinationspolymers ${}_{\infty}^{1}[GdCl_3(dpe)(py)]\cdot 0,5(dpe,py)$ in einer Auftragung der absoluten Intensität $I_{abs}$ [cps] gegen die Wellenlänge $\lambda$ [nm] gezeigt. Bei der Verbindung handelt es sich um einen Teil einer Zusammensetzung als Sicherheitsmerkmal für ein pharmazeutisches Produkt fungiert und in Form einer Beschichtung auf entsprechendes Packmaterial aufgebracht oder in dieses eingebracht wird. Als Koordinationszentrum dient $Gd^{3+}$, an welchem die Liganden 4,4'-Dipyridyethen (dpe) und Pyridin (py) koordiniert sind.

Der gadoliniumhaltige Strang ${}_{\infty}^{1}[GdCl_3(dpe)(py)]\cdot 0,5(dpe,py)$ zeigt bei einer Anregungswellenlänge von $\lambda_{exc}$ = 300 nm eine intensive breite Emissionsbande, die sich von nahen UV-Bereich (UV-A) bis in den blauen Bereich des sichtbaren Spektrums hinein erstreckt. Die Fälschungssicherheit kann erhöht werden, da ein Teil der emittierten Strahlung unsichtbar ist.

In Fig. 2 ein Emissionsspektrum 11 des ein zweidimensionales Netzwerk ausbildenden Koordinationspolymers ${}_{\infty}^{2}[EuCl_3(tz)_2(thz)]\cdot(thz)$ in einer Auftragung der absoluten Intensität $I_{abs}$ [cps] gegen die Wellenlänge $\lambda$ [nm] gezeigt. Das auf den $Eu^{3+}$-Ionen und den daran koordinierten schwefelhaltigen Liganden 1,3-Thiazol (thz) und 1,2,4 Triazol (tz) aufbauende zweidimensionale Netzwerk ${}_{\infty}^{2}[EuCl_3(tz)_2(thz)]\cdot(thz)$ zeigt bei einer Anregungswellenlänge von $\lambda_{exc}$ = 323 nm eine Emission im orange-roten Bereich des sichtbaren Spektrums.

Anders als bei den $Gd^{3+}$- Ionen wie in Fig. 1, welche eine breite Emissionsbande besitzen, zeigt das Emissionsspektrum 11 von ${}_{\infty}^{2}[EuCl_3(tz)_2(thz)]\cdot(thz)$ ein diskontinuierliches Linienspektrum mit klar definierten Signalen, welche eine spezifische Feinaufspaltung besitzen. Auch diese Koordinationsverbindung kann als Komponente einer Zusammensetzung als Sicherheitsmerkmal für ein pharmazeutisches Produkt eingesetzt und in Form einer Beschichtung auf entsprechendes Packmaterial aufgebracht oder in dieses eingebracht werden. Aufgrund der einzelnen Übergänge in einem engen Wellenlängenbereich von 550 nm bis 700 nm ist die Fälschungssicherheit gegeben.

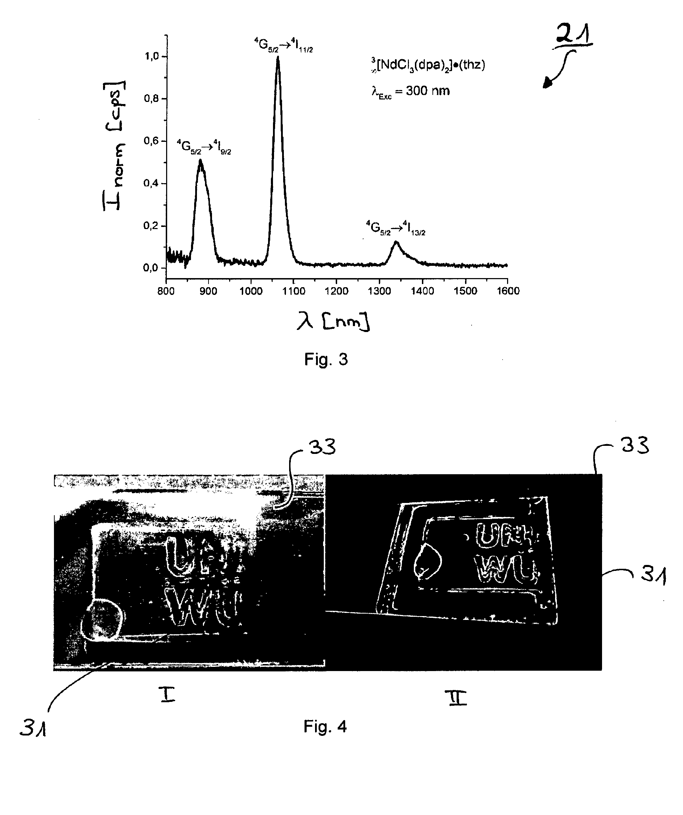

Fig. 3 zeigt ein Emissionsspektrum 21 des ein eindimensionales Netzwerk ausbildenden Koordinationspolymers $_{\infty}^{3}[NdCl_3(dpa)_2]\cdot(thz)$ in einer Auftragung der normierten Intensität $I_{norm}$ [cps] gegen die Wellenlänge $\lambda$ [nm]. In der Koordinationsverbindung $_{\infty}^{3}[NdCl_3(dpa)_2]\cdot(thz)$ sind die Liganden 1,3-Thiazol (thz) und 4,4'-Dipyridylethan (dpa) an $Nd^{3+}$-Ionen koordiniert. Das dreidimensionale Netzwerk wandelt das bei einer Anregungswellenlänge von $\lambda_{exc} = 300$ nm eingestrahlte UV-Licht in eine langwellige Emission im NIR-Bereich um. Die Koordinationsverbindung $_{\infty}^{3}[NdCl_3(dpa)_2]\cdot(thz)$ dient als UV-Absorber ebenfalls der Fälschungssicherheit eines Packmittels bzw. des entsprechenden pharmazeutischen Produktes.

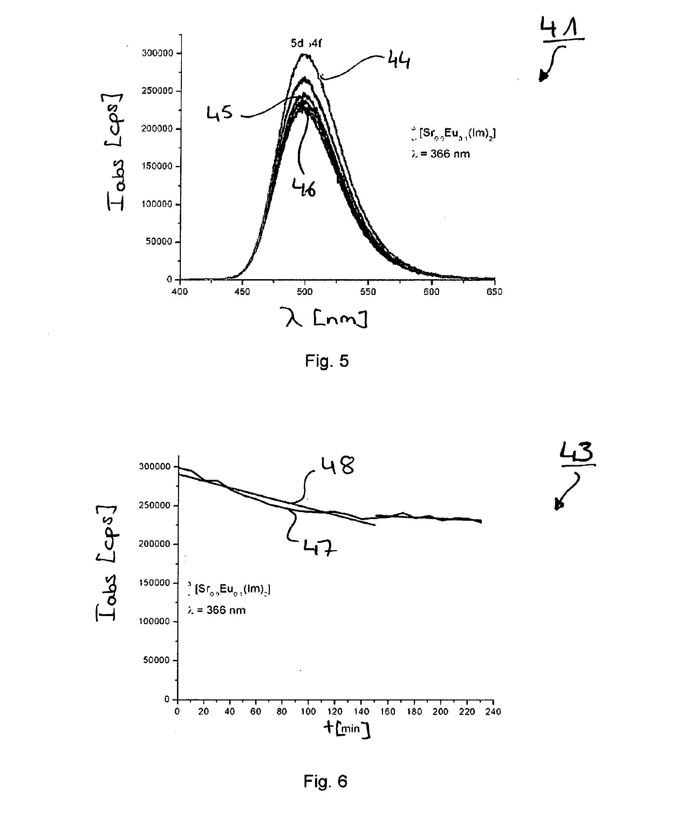

Fig. 4 zeigt ein lumineszierendes Label 31 bei Tageslicht (Fig. 4 I) und unter UV-Einstrahlung (Fig. 4 II). Das Label 31 ist auf ein Packmaterial 33 aufgebracht und dient als "anti counterfeiting label". Das Label 31 wird mittels einer Maske und einer organischen Matrize hergestellt, das bei UV Einstrahlung luminesziert und somit eine schnelle Verifizierung der Echtheit der Produkte garantiert (Abb.5). Die Fälschungssicherheit kann weiter erhöht werden, indem die Verbindung und damit die charakteristische Emission kombiniert werden; z.B. unsichtbar und sichtbar. Die Zusammensetzung des Labels 31 umfasst hierbei das ein eindimensionales Koordinationspolymer $_{\infty}^{3}[NdCl_3(dpa)_2]\cdot(thz)$ und das Netzwerk ausbildende $_{\infty}^{2}[EuCl_3(tz)_2(thz)]\cdot(thz)$.

In den Fig. 5 und 6 sind mehrere Emissionsspektren 41 des ein dreidimensionales Netzwerk ausbildenden Koordinationspolymers $_{\infty}^{3}[Sr_{0.9}Eu_{0.1}(Im)_2]$ unter Einfluss von Luftfeuchtigkeit (Fig. 5), sowie die zugehörige Intensitätsabnahme der Lumineszenz des 5d→4f Übergangs der Koordinationsverbindung $_{\infty}^{3}[Sr_{0.9}Eu_{0.1}(Im)_2]$ (Fig. 6) verdeutlichende Auftragung 43 gegen die Zeit gezeigt. Die Koordinationsverbindung $_{\infty}^{3}[Sr_{0.9}Eu_{0.1}(Im)_2]$ wird als Teil einer Zusammensetzung eingesetzt, die als Hydrolysesensor, bzw. als Feuchtigkeitssensor für ein Packmittel dient.

Anhand des Emissionsspektrums 41 in Fig. 5 ist die Änderung der Intensität der Lumineszenz bei einer Anregungwellenlänge $\lambda_{exc.} = 366$ nm von $_{\infty}^{3}[Sr_{0.9}Eu_{0.1}(Im)_2]$ aufgrund von Hydrolyseprozessen in einer Auftragung der absoluten Intensität $I_{abs}$ [cps] gegen die Wellenlänge $\lambda$ [nm] über einen Zeitraum von 240 min zu sehen. Das Koordinationspolymer $_{\infty}^{3}[Sr_{0.9}Eu_{0.1}(Im)_2]$ zeigt bei ca. 25 % relativer Luftfeuchte eine Abnahme der Intensität der Lumineszenz des 5d→4f Übergangs innerhalb von 200 min bis zu einem Schwellenwert. So nimmt die Intensität der Lumineszenz von 1 Minute (Kurve 44) bis zu 100 Minuten Exposition deutlich ab (Kurve 45). Nach 200 min ist keine Änderung der Lumineszenz mehr zu verzeichnen (Kurve 46).

Ab diesem Punkt zeigt das metallorganische Grundgerüst (MOF) eine Passivierung, so dass kein Verlust der Lumineszenz mehr zu detektieren ist. Dies kann auch Fig. 6 entnommen werden, in welcher die absolute Intensität $I_{abs}$ [cps] gegen die Zeit t [min] aufgetragen ist. Ab etwa 200 min tritt keine Änderung der Lumineszenz mehr ein, was anhand der Messkurve 47 und der Extrapolation 48 zu sehen ist. Die Passivierung ist als Schwellenwert durch die Partikelgröße einstellbar. Die Hydrolyse-Schwelle, die Hydrolyse-Geschwindigkeit und die Vollständigkeit der Hydrolyse hängen hierbei neben der Wassermenge auch von der Sensibilität des genutzten Systems ab.

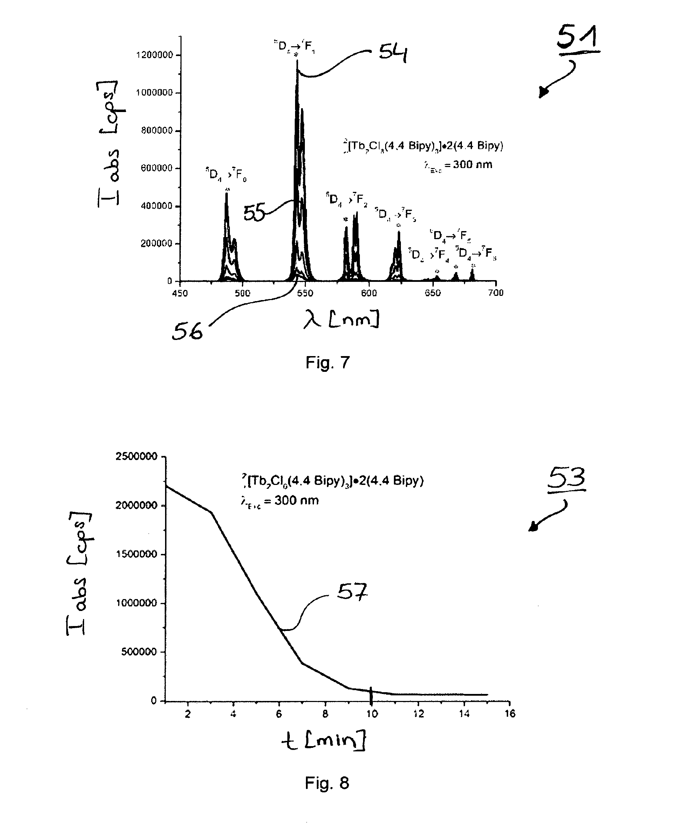

Während es bei $_{\infty}^{3}[Sr_{0.9}Eu_{0.1}(Im)_2]$ zu einer Passivierung kommen kann, wird das System $_{\infty}^{2}[Tb_2Cl_6(4,4'Bipy)]\cdot2(4,4'Bipy)$ bei Kontakt mit Luftfeuchtigkeit vollständig hydrolysiert. Dies ist in den Fig. 7 und 8 gezeigt. Das ein zweidimensionales Netzwerk ausbildende Koordinationspolymer $_{\infty}^{2}[Tb_2Cl_6(4,4'Bipy)]\cdot2(4,4'Bipy)$ wird ebenfalls in einer Zusammensetzung eingesetzt, die als Feuchtigkeitssensor für ein Packmittel dient. Die Koordinationszentren sind $Tb^{3+}$. Ionen, an welche die Liganden 4,4'-Bipyridyl (4,4'Bipy) koordiniert sind.

In den Fig. 7 und 8 sind entsprechend ebenfalls Emissionsspektren 51 von $_{\infty}^{2}[Tb_2Cl_6(4,4'Bipy)]\cdot2(4,4'Bipy)$ unter Einfluss von Luftfeuchtigkeit (Fig. 7), sowie eine die Intensitätsabnahme der Lumineszenz aller Übergänge der Koordinationsverbindung $_{\infty}^{2}[Tb_2Cl_6(4,4'Bipy)]\cdot2(4,4'Bipy)$ (Fig. 8) verdeutlichende Auftragung 53 der absoluten Intensität $I_{abs}$ [cps] gegen die Zeit t [min] gezeigt. Das Koordinationspolymer $_{\infty}^{2}[Tb_2Cl_6(4,4'Bipy)]\cdot2(4,4'Bipy)$ wird als Feuchtigkeitssensor für ein Packmittel eingesetzt.

Man erkennt anhand des Emissionsspektrums 51, in dem die absolute Intensität $I_{abs}$ [cps] gegen die Wellenlänge λ [nm] über einen Zeitraum von 15 min aufgetragen ist, dass bei Einwirkung einer definierten Luftfeuchtigkeit, der die Verbindung ausgesetzt wird, zügig eine vollständige Hydrolyse einsetzt. So ist nach 1 Minute noch eine hohe Lumineszenz zu beobachten (Kurve 54), die jedoch schnell deutlich abnimmt. Nach etwa 5 Minuten ist der die Intensität etwa halbiert (Kurve 55) und nach 10 Minuten ist kaum noch eine Lumineszenz zu beobachten (Kurve 56). Dies kann auch anhand der Kurve 57 in der Auftragung 53 in Fig. 8 deutlich gezeigt werden, wo klar zu sehen ist, dass bereits nach etwa 10 Minuten Kontakt nahezu keine Lumineszenz der Koordinationsverbindung $_{\infty}^{2}[Tb_2Cl_6(4,4'Bipy)]\cdot2(4,4'Bipy)$ mehr zu verzeichnen ist. Diese Abhängigkeit, also die schnelle Lumineszenzabnahme, eignet sich insbesondere für einen schnell ansprechenden Hydrolysesensor.

Diese Sensortypen sind irreversibel, so dass eine falsche Detektion durch nachträgliche Trocknung ausgeschlossen ist. Dadurch wird auch eine fehlerhafte Bestimmung der Arzneimittelhaltbarkeit vermieden.

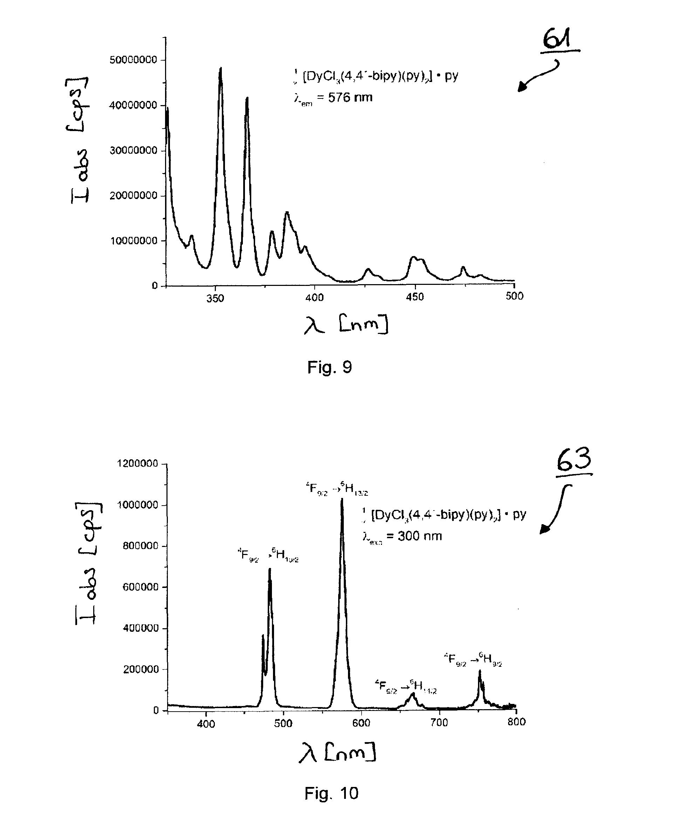

In den Fig. 9 und 10 sind ein Anregungsspektrum 61 des ein eindimensionalen Koordinationspolymers $_{\infty}^{1}[DyCl_3(4,4'\text{-}bipy)(py)_2]\cdot py$ (Fig. 9), sowie ein Emissionsspektrum 63 (Fig. 10), jeweils in einer Auftragung der absoluten Intensität $I_{abs}$ [cps] gegen die Wellenlänge λ [nm] gezeigt. Die Koordinationsverbindung $_{\infty}^{1}[DyCl_3(4,4'\text{-}bipy)(py)_2]\cdot py$ wird in einer Zusammensetzung eingesetzt, die als Absorber in den Wellenlängenbereichen 200 nm bis 330 nm, 355 nm, 365 nm sowie 375 nm bis 400 nm einen Lichtschutz von in einem Packmittel verwahrten pharmazeutischen Produkt darstellt.

Der Strang $_{\infty}^{1}[DyCl_3(4,4'\text{-}bipy)(py)_2]\cdot py$ zeigt im Anregungsspektrum 61 bei einer Emissionswellenlänge von $\lambda_{em}$ = 576 nm eine intensitätsabhängige Absorption über den gesamten UV-A-Bereich bis in den kurzwelligen Bereich des sichtbaren Spektrums, wobei im Bereich von 200 nm bis 400 nm starke Absorptionen zu beobachten sind (Fig. 9). Die Abgabe der absorbierten Strahlung erfolgt teilweise als Licht, wie im Emissionsspektrum 63 in Fig. 10 gezeigt, im langwelligen Bereich des sichtbaren Spektrums mit vier definierten Übergängen in einem Bereich zwischen etwa 450 nm und 800 nm ("Downshifting" der Energie).

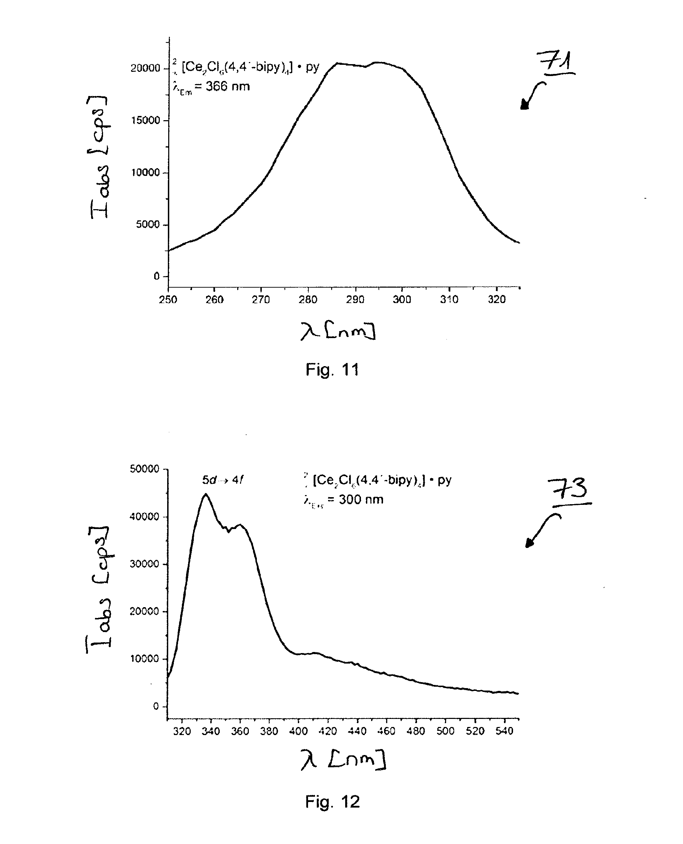

Die Fig. 11 und 12 zeigen ein Anregungsspektrum 71 des ein zweidimensionales Netzwerk ausbildenden Koordinationspolymers $_{\infty}^{2}[Ce_2Cl_6(4,4'\text{-}bipy)_4]\cdot py$ (Fig. 11), sowie ein Emissionsspektrum 73 (Fig. 12), jeweils in einer Auftragung der absoluten Intensität $I_{abs}$ [cps] gegen die Wellenlänge λ [nm]. Das Koordinationspolymer $_{\infty}^{2}[Ce_2Cl_6(4,4'\text{-}bipy)_4]\cdot py$ zeigt im Anregungsspektrum 71 eine breite Absorptionsbande im Bereich von etwa 270 nm bis 315 nm und deckt damit einen wesentlichen Bereich der hochenergetischen UV-B-Strahlung ab und wandelt diese in weniger energetische nahe UV-Strahlung sowie blaue Lumineszenz um.

Das Anregungsspektrum 71 von $_{\infty}^{2}[Ce_2Cl_6(4,4'\text{-}bipy)_4]\cdot py$ zeigt eine breite Absorption im UV-B-Bereich, wobei der beste Lichtschutz für maximale Absorption im Bereich von etwa 270 nm bis 315 nm erreicht wird. Das absorbierte Licht wird bathochrom verschoben im Bereich zwischen 330 nm und 480 nm re-emittiert, wie das Emissionsspektrum 73 zeigt. Erneut kommen Energiekonversion (Down-Shift) und geringe Aufheizung durch Eigenemission zum Tragen.

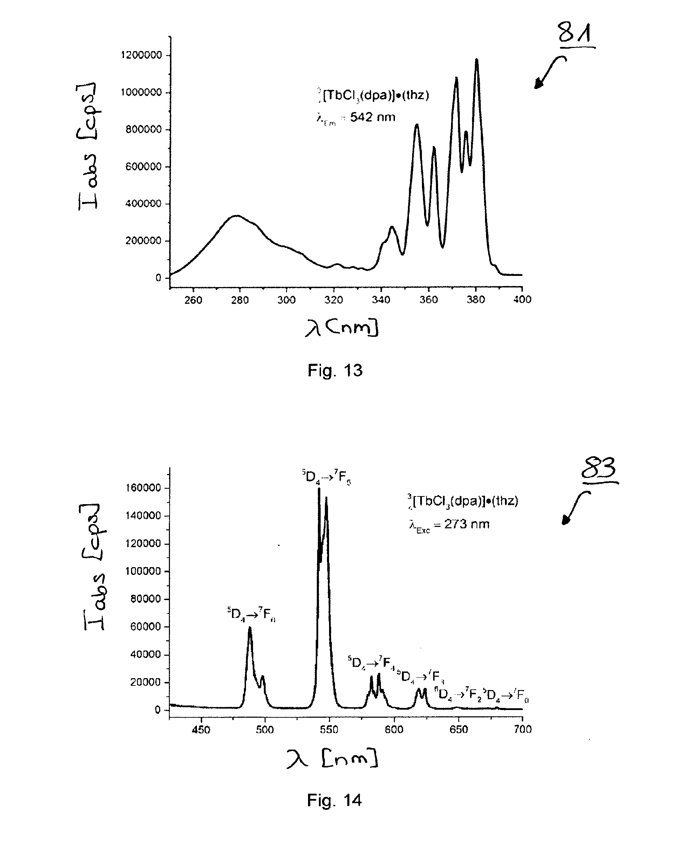

Fig. 13 zeigt ein Anregungsspektrum 81 des ein dreidimensionales Netzwerk ausbildenden Koordinationspolymers $_{\infty}^{3}[TbCl_3(dpa)]\cdot thz$ in einer Auftragung der absoluten Intensität $I_{abs}$ [cps] gegen die Wellenlänge λ [nm]. Fig. 14 zeigt ein Emissionsspektrums 83 von $_{\infty}^{3}[TbCl_3(dpa)]\cdot thz$, ebenfalls in einer Auftragung der absoluten Intensität $I_{abs}$ [cps] gegen die Wellenlängen λ [nm]. In der Koordinationsverbindung $_{\infty}^{3}[TbCl_3(dpa)]\cdot thz$ sind die Liganden 1,3-Thiazol (thz) und 4,4'- Dipyridylethan (dpa) an $Tb^{3+}$-Ionen koordiniert. Das Anregungsspektrum 81 zeigt eine breite Absorption im Bereich von 260 nm bis 390 nm, wobei das Absorptionsmaximum der Liganden bei 280 nm und die Absorptionsmaxima der $Tb^{3+}$-Ionen zwischen 355 nm und 385 nm liegen. Das Emissionsspektrum 83 ist ein Linienspektrum und zeigt die charakteristischen, scharfen Übergänge für $Tb^{3+}$ im Bereich von 475 nm bis 675 nm und damit erneut einen deutlichen "Downshift".

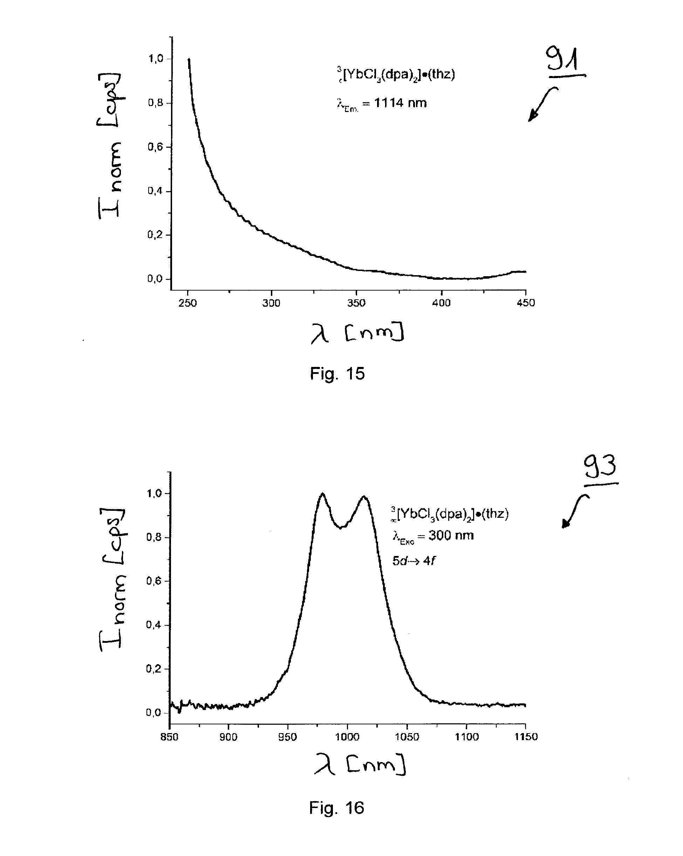

Den größten "Downshift" der Energie zeigt das dreidimensionale Netzwerk des Koordinationspolymers $_{\infty}^{3}[YbCl_3(dpa)]\cdot thz$. Dieses Koordinationspolymer eignet sich ebenfalls gut als Feuchtigkeitssensor, UV-Absorber und Echtheitsmerkmal für ein Packmittel. Fig. 15 zeigt hierzu ein Anregungsspektrum 91 von $_{\infty}^{3}[YbCl_3(dpa)]\cdot thz$ und Fig. 16 ein Emissionsspektrum 93, jeweils in einer Auftragung der normierten Intensität $I_{norm}$ [cps] gegen die Wellenlänge λ [nm]. Das Anregungsspektrum 91 von ${}^{3}_{\infty}$[YbCl$_3$(dpa)]•thz (links) zeigt eine Absorption im kurzwelligen Bereich der UV-Strahlung zwischen 250-300nm. Das Emissionsspektrum 93 zeigt eine breitbandige Emission im NIR-Bereich von 950 nm bis1050 nm, womit ein Gesamtshift der Energie von 700 nm erreicht wird.

Bezugszeichenliste

| | |
|---|---|
| 1 | Emissionsspektrum von ${}^{1}_{\infty}$[GdCl$_3$(dpe)(py)]•0,5(dpe,py) |
| 11 | Emissionsspektrum von ${}^{2}_{\infty}$[EuCl$_3$(tz)$_2$(thz)]•(thz) |
| 21 | Emissionsspektrum von ${}^{3}_{\infty}$[NdCl$_3$(dpa)$_2$]•(thz) |
| 31 | Label |
| 33 | Packmittel |
| 41 | Emissionsspektrum von ${}^{3}_{\infty}$[Sr$_{0.9}$Eu$_{0.1}$(Im)$_2$] |
| 43 | Auftragung |
| 44 | Lumineszenz von ${}^{3}_{\infty}$[Sr$_{0.9}$Eu$_{0.1}$(Im)$_2$] nach 1 Minute |
| 45 | Lumineszenz von ${}^{3}_{\infty}$[Sr$_{0.9}$Eu$_{0.1}$(Im)$_2$] nach 100 Minuten |
| 46 | Lumineszenz von ${}^{3}_{\infty}$[Sr$_{0.9}$Eu$_{0.1}$(Im)$_2$] nach 200 Minute |
| 47 | zeitliche Änderung der Lumineszenz von ${}^{3}_{\infty}$[Sr$_{0.9}$Eu$_{0.1}$(Im)$_2$] |
| 48 | Extrapolation |
| 51 | Emissionsspektrum von ${}^{2}_{\infty}$[Tb$_2$Cl$_6$(4,4'Bipy)]•2(4,4'Bipy) |
| 53 | Auftragung |
| 54 | Lumineszenz von ${}^{2}_{\infty}$[Tb$_2$Cl$_6$(4,4'Bipy)]•2(4,4'Bipy) nach 1 Minute |
| 55 | Lumineszenz von ${}^{2}_{\infty}$[Tb$_2$Cl$_6$(4,4'Bipy)]•2(4,4'Bipy) nach 5 Minuten |
| 56 | Lumineszenz von ${}^{2}_{\infty}$[Tb$_2$Cl$_6$(4,4'Bipy)]•2(4,4'Bipy) nach 15 Minuten |
| 57 | zeitliche Änderung der Lumineszenz von ${}^{2}_{\infty}$[Tb$_2$Cl$_6$(4,4'Bipy)]•2(4,4'Bipy) |
| 61 | Anregungsspektrum von ${}^{1}_{\infty}$[DyCl$_3$(4,4'-bipy)(py)$_2$]•py |
| 63 | Emissionsspektrum von ${}^{1}_{\infty}$[DyCl$_3$(4,4'-bipy)(py)$_2$]•py, |
| 71 | Anregungsspektrum von ${}^{2}_{\infty}$[Ce$_2$Cl$_6$(4,4'-bipy)$_4$]•py |
| 73 | Emissionsspektrum von ${}^{2}_{\infty}$[Ce$_2$Cl$_6$(4,4'-bipy)$_4$]•py |
| 81 | Anregungsspektrum von ${}^{3}_{\infty}$[TbCl$_3$(dpa)]•thz |
| 83 | Emissionsspektrum von ${}^{3}_{\infty}$[TbCl$_3$(dpa)]•thz |
| 91 | Anregungsspektrum von ${}^{3}_{\infty}$[YbCl$_3$(dpa)]•thz |

(fortgesetzt)

| 93 | Emissionsspektrum von ${}_\infty^3$[YbCl$_3$(dpa)]•thz |

## Patentansprüche

1. Verwendung einer Zusammensetzung für ein Packmittel (33), insbesondere für ein Packmittel (33) eines pharmazeutischen Produktes, wobei die Zusammensetzung eine lumineszierende Koordinationsverbindung der allgemeinen Formel (M$_x$L$_y$)$_n$ mit zumindest einem Koordinationszentrum M, sowie mit einer Anzahl von an dem oder jedem Koordinationszentrum M koordinierten Liganden L umfasst, und wobei das oder jedes Koordinationszentrum M ausgewählt ist aus einer Gruppe, die Erdalkalimetalle, Seltene-Erd-Metalle und Metalle der 13. Gruppe und der 15. Gruppe des Periodensystems enthält.

2. Verwendung nach Anspruch 1, wobei als Koordinationsverbindung ein Koordinationspolymer umfasst ist.

3. Verwendung nach Anspruch 1 oder 2, wobei die Koordinationsverbindungen eine mehrdimensionale Struktur, insbesondere ein mehrdimensionales Netzwerk oder eine strangartige Verknüpfung, ausbilden.

4. Verwendung nach einem der vorhergehenden Ansprüche, wobei die Koordinationszentren der Koordinationsverbindungen über verbrückende Liganden L koordiniert sind.

5. Verwendung nach einem der vorhergehenden Ansprüche, wobei das oder jedes Koordinationszentrum M einer Koordinationsverbindung ausgewählt ist aus einer Gruppe, die Magnesium (Mg), Calcium (Ca), Strontium (Sr), Barium (Ba), Scandium (Sc), Yttrium (Y), Lanthan (La), Cer (Ce), Praseodym (Pr), Neodym (Nd), Samarium (Sm), Europium (Eu), Gadolinium (Gd), Terbium (Tb), Dysprosium (Dy), Holmium (Ho), Erbium (Er), Thulium (Tm), Ytterbium (Yb), Lutetium (Lu), Aluminium (Al), Gallium (Ga), Indium (In) und Bismuth (Bi) enthält.

6. Verwendung nach einem der vorhergehenden Ansprüche, wobei die Liganden L ausgewählt sind aus einer Gruppe, die 1 H-Pyrrol (PyrH), 1H-Imidazol (ImH), 1 H-Pyrazol (PzH), 1H-1,2,3-Triazol (tz*H), 1 H-1,2,4-Triazol (tzH), Thiazol (thz), Azol-1H$^+$, Pyridin, 4,4'-Bipyridin, 4,4'-Dipyridylethan (dpa), 4,4'-Dipyridylethen (dpe), 4,4'-Dipyridylethin (dpi) und Pyrazin (Pyz) enthält.

7. Verwendung nach einem der vorhergehenden Ansprüche, wobei die Zusammensetzung eine Koordinationsverbindung umfasst, die ausgewählt ist aus einer Gruppe, die ${}_\infty^1$[LnCl$_3$(dpe)(py)]•0,5-2(dpe.py), ${}_\infty^2$[Ln$_2$Cl$_6$(dpe)$_3$(py)$_2$]·dpe, ${}_\infty^1$[Ln$_2$Cl$_6$(dpe)$_2$(thz)$_4$]·dpe, ${}_\infty^1$[LnCL$_3$(dpe)(thz)$_2$]·thz, ${}_\infty^2$[LnCl$_3$(tz)$_2$(thz)]•(thz), ${}_\infty^1$[LnCl$_3$(thz)$_3$]·thz, [Ln$_2$Cl$_6$(thz)$_8$]·3thz, [Ln$_2$Cl$_6$(thz)$_8$], [LnCl$_3$(thz)$_4$]·0.5-2(thz), ${}_\infty^3$[LnCl$_3$(dpa)$_2$]•(thz), ${}_\infty^3$[AE$_{1-x}$Eu$_x$(Im)$_2$], [Ln$_2$Cl$_6$(4,4'Bipy)]·2(4,4'-Bipy), ${}_\infty^1$[LnCl$_3$(4,4-Bipy)(py)$_2$]•(py), ${}_\infty^2$[Ln$_2$Cl$_6$(4,4'Bipy)$_4$]•(py), ${}_\infty^3$[LnCl$_3$(dpa)]•0,5-2(thz), ${}_\infty^3$[LnCl$_3$(dpa)]•0,5-4(thz), ${}_\infty^3$[LnCl$_3$(dpa)]•0,5-2(py), ${}_\infty^1$[LnCl$_3$(bipy)(py)$_2$]•(py), ${}_\infty^1$[Ln$_2$Cl$_5$(bip)$_2$(py)$_4$]- · ${}_\infty^1$[LnCl$_4$(bipy)], ${}_\infty^2$[Ln$_2$Cl$_6$(bipy)$_5$]•4(bipy)), ${}_\infty^3$[Ln(Im)$_3$ImH], ${}_\infty^3$[Ln(Im)$_3$ImH]•ImH, ${}_\infty^3$[Ln$_3$(Im)$_9$(ImH)$_2$]·2ImH, ${}_\infty^3$[Ln$_2$(Im)$_6$(ImH)$_{1.5}$]·0.5ImH, ${}_\infty^3$[Ln(Im)$_3$] sowie [Ln$_2$Cl$_6$(pyz)$_4$] und [Bi$_{(2-x)}$Ln$_x$Cl$_6$(pyz)$_4$] enthält.

8. Verwendung nach einem der vorhergehenden Ansprüche, wobei das Packmittel (33) mit der Zusammensetzung beschichtet ist.

9. Verwendung nach einem der vorhergehenden Ansprüche, wobei die Zusammensetzung als ein Echtheitssensor eingesetzt wird.

10. Verwendung nach einem der vorhergehenden Ansprüche, wobei die Zusammensetzung als ein Feuchtigkeitssensor eingesetzt wird.

11. Verwendung nach einem der vorhergehenden Ansprüche, wobei die Zusammensetzung als ein Lichtschutz eingesetzt wird.

12. Packmittel (33), insbesondere für ein pharmazeutisches Produkt, umfassend eine Zusammensetzung, die zumindest eine Koordinationsverbindung der allgemeinen Formel $(M_xL_y)_n$ mit zumindest einem Koordinationszentrum M, sowie mit einer Anzahl von an dem oder jedem Koordinationszentrum koordinierten Liganden L umfasst, wobei das oder jedes Koordinationszentrum M ausgewählt ist aus einer Gruppe, die Erdalkalimetalle, Seltene-Erd-Metalle, und Metalle der 13. Gruppe und der 15. Gruppe des Periodensystems enthält.

13. Packmittel (33) nach Anspruch 12, wobei die Zusammensetzung als ein Echtheitssensor eingesetzt ist.

14. Packmittel (33) nach Anspruch 12 oder 13, wobei die Zusammensetzung als ein Feuchtigkeitssensor eingesetzt ist.

15. Packmittel (33) nach einem der Ansprüche 12 bis 14, wobei die Zusammensetzung als ein Lichtschutz eingesetzt ist.

Fig. 1

Fig. 2

Fig. 3

Fig. 4

Fig. 5

Fig. 6

Fig. 7

Fig. 8

Fig. 9

Fig. 10

Fig. 11

Fig. 12

Fig. 13

Fig. 14

Fig. 15

Fig. 16

Europäisches
Patentamt

European
Patent Office

Office européen
des brevets

# EUROPÄISCHER RECHERCHENBERICHT

**Nummer der Anmeldung**

EP 14 00 3034

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2014/008576 A1 (IMBERT DANIEL [FR] ET AL) 9. Januar 2014 (2014-01-09) | 1-6,8-15 | INV. C09K11/06 |
| A | * Absatz [0002]; Ansprüche 1-11 * <br> * Absatz [0069] - Absatz [0070] * <br> ----- | 7 | |
| X | US 2005/178841 A1 (JONES GUILFORD II [US] ET AL) 18. August 2005 (2005-08-18) | 1-6,8-15 | |
| A | * Absatz [0046] * <br> * Absatz [0065] * <br> * Ansprüche 1-48 * <br> ----- | 7 | |
| X | US 2014/093664 A1 (THOMAS FREDERIC [CH] ET AL) 3. April 2014 (2014-04-03) | 1-6,8-15 | |
| A | * Ansprüche 1-43 * <br> ----- | 7 | |

**RECHERCHIERTE SACHGEBIETE (IPC)**

C09K

Der vorliegende Recherchenbericht wurde für alle Patentansprüche erstellt

| Recherchenort | Abschlußdatum der Recherche | Prüfer |
|---|---|---|
| Den Haag | 24. Februar 2015 | Mehdaoui, Imed |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

    ......................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 14 00 3034

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

24-02-2015

| Im Recherchenbericht angeführtes Patentdokument | Datum der Veröffentlichung | Mitglied(er) der Patentfamilie | Datum der Veröffentlichung |
|---|---|---|---|
| US 2014008576 A1 | 09-01-2014 | EP 2684934 A1<br>FR 2992970 A1<br>US 2014008576 A1 | 15-01-2014<br>10-01-2014<br>09-01-2014 |
| US 2005178841 A1 | 18-08-2005 | AU 2002345586 A1<br>EP 1532576 A1<br>US 2005178841 A1<br>WO 03105075 A1 | 22-12-2003<br>25-05-2005<br>18-08-2005<br>18-12-2003 |
| US 2014093664 A1 | 03-04-2014 | US 2014093664 A1<br>WO 2014048702 A1 | 03-04-2014<br>03-04-2014 |

EPO FORM P0461

Für nähere Einzelheiten zu diesem Anhang : siehe Amtsblatt des Europäischen Patentamts, Nr.12/82